# DEMANDE DE BREVET EUROPEEN

(11) **EP 3 096 219 A1**
(43) Date de publication de la demande: **23.11.2016**
(21) Numéro de dépôt: 16170520.7
(22) Date de dépôt: 20.05.2016
(51) Int. Cl.: G06F 3/0489, H04N 5/445, H04N 21/4722, H04N 21/45, H04N 21/485, H04N 21/488

(54) **PROCÉDÉ ET DISPOSITIF POUR SÉLECTIONNER UN CONTENU MULTIMÉDIA SECONDAIRE**

(30) Priorité: 22.05.2015 FR 1554656
(71) Demandeur: Orange, 75015 Paris (FR)
(72) Inventeur: RIVOALEN, Mathieu, 22300 LANNION (FR); LE GOFF, Gwénaël, 22300 LANNION (FR)

(57) **Abrégé**

L'invention concerne un dispositif et un procédé pour sélectionner un contenu multimédia secondaire (CS, STES) associé à un contenu multimédia principal (CP) restitué sur un dispositif de restitution (TV, 7). Les contenus sont stockés dans un réseau (1,10) et commandés par un dispositif de télécommande (5).

Le procédé comportant les étapes suivantes :
- restitution (E22) du contenu multimédia principal sur le dispositif de restitution (7) ;
- détection (E23) d'une action (S,T,E,S) sur le dispositif de télécommande (5) ;
- accès (E25) au contenu secondaire (STES) correspondant à ladite action ;
- restitution (E26) du contenu secondaire (STES) avec le contenu principal (CP) sur le dispositif de restitution.

Le procédé est caractérisé en ce que l'accès au contenu secondaire (E25) est précédé d'une étape d'obtention (E24) d'une donnée de mise en correspondance (T) entre l'action (S,T,E,S) sur le dispositif de télécommande (5) et le contenu secondaire (STES).

## Description

### Domaine technique

La présente invention concerne le domaine de la restitution de données correspondant à des contenus multimédia.

On entend par contenu multimédia tout contenu comportant au moins un média de type audio, vidéo, texte, ou plus généralement tout contenu numérique, ci-après désigné par « contenu ». On entend par chaîne de contenus multimédia, ou chaîne de télévision, ou plus simplement « chaîne » une succession de tels contenus dans le temps.

L'invention s'applique à la restitution de tels contenus sur un terminal, équipé d'un écran, connecté à un réseau, qu'il soit de type local ou étendu et que le contenu soit diffusé (réseau de type DVB - Digital Video Broadcast) ou transmis (réseau de type Internet). La restitution s'entend généralement par l'affichage du contenu sur un écran d'un tel terminal ou sa restitution sonore.

### Etat de la technique

Dans le domaine de la mise à disposition de contenus multimédia, comme par exemple des films, émissions télévisées, musique, etc. sur le terminal de restitution d'un utilisateur (téléviseur, PC, tablette, etc.), les contenus proposés sont accompagnés, quelle que soit leur provenance et leur type de mise à disposition (télévision numérique diffusée sur un réseau étendu de diffusion par exemple TNT-Télévision Numérique de Terre ou ADSL- *Asynchronous Digital Subscriber Line,* contenu délivré ou diffusé dans un réseau local via un serveur de communication interne (en anglais, « média center »), dans un réseau étendu sur un serveur de streaming, etc.), d'options de plus en plus variées : choix de la langue, des sous-titres, enrichissement du contenu, interaction avec le contenu, etc.

Pour faciliter le choix de ces options, les applications de gestion de tels contenus proposent généralement des menus interactifs disponibles par affichage sur le dispositif de restitution, par exemple téléviseur. Une manière connue pour accéder à ce type de menu repose sur l'utilisation d'une télécommande : une liste d'options disponibles pour le contenu en cours est affichée sur requête de l'utilisateur. Pour faire apparaître le menu, l'utilisateur, tout en poursuivant le visionnage du contenu, appuie sur une touche spécifique (par exemple, « menu ») de sa télécommande. Il peut ensuite naviguer dans les différents sous-menus en faisant défiler les options, typiquement à l'aide de flèches "vers le haut" ou "vers le bas" d'un pavé de navigation de la télécommande. La télécommande contient également un moyen de sélection d'une option, par exemple une touche "ok". L'utilisateur doit donc dans ce contexte sélectionner le menu, retrouver en naviguant le sous-menu approprié (e.g. pour choisir la langue des sous-titres) et sélectionner le bon paramètre (e.g. l'espagnol).

Il est fastidieux et long pour l'utilisateur d'un tel système de naviguer dans ces menus, d'autant plus s'il n'en maîtrise pas l'ordonnancement et souhaite simplement activer une piste de sous-titres sans détours compliqués par l'interface de navigation.

Pendant ce temps, le contenu continue sa restitution sur le téléviseur. Le temps nécessaire à la sélection du sous-menu souhaité a pour conséquence que le contenu est restitué sans le sous-titrage souhaité et détourne l'attention de l'utilisateur sur le parcours dans les menus et non sur la restitution du contenu.

L'invention offre une solution ne présentant pas les inconvénients de l'état de la technique.

### L'invention

A cet effet, selon un aspect fonctionnel, l'invention a pour objet un procédé pour sélectionner un contenu multimédia secondaire associé à un contenu multimédia principal restitué sur un dispositif de restitution, les contenus étant stockés dans un réseau et commandés par un dispositif de télécommande, le procédé comportant les étapes suivantes :
- restitution du contenu multimédia principal sur le dispositif de restitution ;
- détection d'une action sur le dispositif de télécommande ;
- accès au contenu secondaire correspondant à ladite action ;
- restitution du contenu secondaire avec le contenu principal sur le dispositif de restitution.
caractérisé en ce que l'accès au contenu secondaire est précédé d'une étape d'obtention d'une donnée de mise en correspondance entre l'action sur le dispositif de télécommande et le contenu secondaire.

Ainsi, l'invention offre l'avantage de pouvoir sélectionner simplement une option associée au contenu multimédia en cours de visualisation. Ce contenu, dit « principal », peut correspondre par exemple à celui d'un film extrait d'un DVD, d'une chaîne TV, d'un flux multimédia stocké dans le réseau élargi (WAN) ou dans le réseau local (LAN) de l'utilisateur, etc. Une option associée à un tel contenu peut être par exemple la langue de la bande sonore, la langue des sous-titres associés, un choix d'information supplémentaires sur le contenu, une option de vote sur le contenu, la configuration du mode audio (multicanal, stéréo...), etc.

Avantageusement, une action spécifique sur certaines touches de la télécommande permet à l'utilisateur de choisir une telle option sans naviguer dans les menus. L'action peut être identifiée par une suite de saisies par pression sur les touches de la télécommande, par exemple « S,T,F,R » pour requérir les sous-titres (« ST ») en français (« FR »), ou la suite « A,D,5,1 » pour une restitution audio (« AD ») en mode multicanal 5.1, etc. Il n'est donc plus nécessaire pour l'utilisateur de naviguer dans un menu complexe pour sélectionner une option. La sélection du contenu secondaire est plus simple et donc aussi plus rapide, ce qui est avantageux lorsque le contenu principal continue à s'écouler.

Selon un mode de mise en oeuvre particulier de l'invention, un procédé tel que décrit plus haut est en outre caractérisé en ce que l'action sur le dispositif de télécommande est une sélection d'au moins deux touches de la télécommande.

Selon ce mode de réalisation, l'utilisateur doit saisir au moins deux touches successivement pour sélectionner le contenu multimédia secondaire. Ceci permet d'offrir à l'utilisateur, notamment s'il est équipé d'une télécommande munie d'un pavé alphanumérique, une chaîne de caractères qui ait un sens vis-à-vis de l'option choisie, par exemple « Sous-Titres» correspond à une sélection successive des touches portant les lettres « S, T » pour annoncer le mode de sélection des sous-titres. Selon un autre exemple, un changement de langue au profit de l'anglais se traduira par « L » suivi « E,N » et un passage en audio 5.1 par « A,D », « 5,1 ».

Selon une variante de ce mode de mise en oeuvre particulier de l'invention, un procédé tel que décrit plus haut est en outre caractérisé en ce que la sélection successive de deux touches sur la télécommande doit être effectuée dans une durée maximale prédéfinie.

Avantageusement, cette variante permet à l'utilisateur de sélectionner deux touches successives dans un intervalle de temps dont la durée maximale est limitée, par exemple à une seconde. Ainsi, dans le cas d'une chaîne alphanumérique, tous les caractères doivent être rentrés successivement en respectant cet intervalle de temps maximal de saisie entre deux caractères ; la chaîne complète (« S, T, F, R ») est interprétée seulement à la fin de la saisie, lorsque le dernier intervalle de temps (après la saisie du de la dernière touche, « R ») est dépassé, ce qui signifie que l'utilisateur a terminé sa saisie et que celle-ci peut donc être analysée.

Selon une autre variante de ce mode de mise en oeuvre particulier de l'invention, qui peut être mise en oeuvre alternativement ou cumulativement avec la précédente, un procédé tel que décrit plus haut est en outre caractérisé en ce que au moins une touche sélectionnée correspond à une information de type de contenu secondaire et permet de faire la mise en correspondance entre l'action sur le dispositif de télécommande et le contenu secondaire.

Selon ce mode de réalisation, l'utilisateur doit saisir au moins une touche pour sélectionner le type de contenu multimédia secondaire. Par « type de contenu secondaire » on entend une catégorie à laquelle se rapporte le contenu secondaire : sous-titres, piste audio, métadonnées sur le contenu, incrustation vidéo, etc. Ceci permet de paramétrer le type de contenu qui peut être choisi. Par exemple, une sélection de sous-titres correspond à une sélection par pression successive des touches portant les lettres « S » puis « T » pour annoncer le mode de sélection des sous-titres puis « F, R » sur la télécommande, ce qui produit la chaîne « STFR » pour Sous-Titres FRançais. La sélection selon cet exemple se compose donc d'un préambule définissant le type de contenu secondaire ( « ST » = sous-titre) et d'une sélection d'un élément possible dans tous les éléments du type de cette catégorie. Ainsi « FR » est une sélection possible dans le type « ST » de la même manière que « EN », « ES », etc., référant à une langue spécifique de sous-titres. Selon un autre exemple, un changement de langue au profit de l'anglais se traduira par « L » pour le type (Langue) et « EN » pour la langue (anglaise) ; un passage en restitution sono 5.1 par « AD » pour le type (AuDio) et « 51 » pour le type d'audio choisi (5.1).

Selon un second mode de mise en oeuvre particulier de l'invention, qui pourra être mis en oeuvre alternativement ou cumulativement avec le premier, un procédé tel que décrit ci-dessus est en outre caractérisé en ce que la donnée de mise en correspondance entre l'action sur le dispositif de télécommande et le contenu secondaire à sélectionner est mémorisée dans une structure de données de correspondance en mémoire d'un terminal au moins du réseau.

Avantageusement, ce mode de réalisation permet au gestionnaire d'un terminal du réseau local (par exemple le décodeur TV associé au téléviseur, ou la passerelle domestique du réseau local, etc.) ou du réseau étendu (serveur dans le *cloud,* etc.) de disposer d'une simple table de correspondance en mémoire qui permette de faire la mise en correspondance entre le contenu secondaire sélectionné sur la télécommande (« ST, FR ») et le contenu secondaire lui-même, de la même manière que si l'utilisateur naviguait dans un menu.

Selon une variante de ce mode de mise en oeuvre particulier de l'invention, un procédé tel que décrit ci-dessus est en outre caractérisé en ce que la structure de données de correspondance en mémoire du terminal est modifiée par l'utilisateur au moyen d'une interface.

Grâce à cette variante, l'utilisateur du dispositif de restitution peut paramétrer à sa guise un certain nombre de touches de sa télécommande : il peut contrôler la table de correspondance qui est inscrite en mémoire d'un terminal, de préférence du réseau local, notamment le décodeur TV associé au téléviseur. Une interface graphique lui est proposée sur l'écran de restitution, par exemple lors de l'initialisation de son terminal (décodeur TV) afin de paramétrer la (les) touche(s), ou succession de touches à sélectionner pour choisir un contenu secondaire. Ultérieurement, si l'action sélectionnée par l'utilisateur pendant qu'un contenu principal est joué correspond à celle qu'il a paramétrée (par exemple une sélection de la touche « rouge » de la télécommande), elle se traduit par le choix d'un contenu secondaire (par exemple, la sélection d'une piste audio en espagnol).

De cette manière, l'accès à l'option souhaitée peut être rendu très rapide : selon les habitudes de l'utilisateur, il peut paramétrer une combinaison/succession de touches rapidement accessibles (e.g. une simple pression sur la touche rouge, ou un appui simultané ou successif sur la touche rouge et la touche verte) rapide et facile à mémoriser.

Naturellement cette variante suppose que la table soit modifiable en mémoire par l'utilisateur et se situe donc en mémoire réinscriptible du terminal (Flash, RAM, etc.)

Selon un aspect matériel, l'invention concerne également dispositif pour sélectionner un contenu multimédia secondaire associé à un contenu multimédia principal restitué sur un dispositif de restitution, les contenus étant stockés dans un réseau et pouvant être commandés par un dispositif de télécommande, le dispositif comprenant les modules suivants :
- un module de restitution du contenu multimédia principal sur le dispositif de restitution ;
- un module de détection d'une action sur le dispositif de télécommande ;
- un module d'accès au contenu secondaire correspondant à ladite action ;
- un module de restitution du contenu secondaire en liaison avec le contenu principal.
caractérisé en ce que le module d'accès au contenu secondaire est apte à obtenir une donnée de mise en correspondance entre l'action sur le dispositif de télécommande et le contenu secondaire à restituer.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

Selon un autre aspect matériel, l'invention concerne également un terminal de communication comprenant un tel dispositif.

Avantageusement selon cet aspect, le terminal de communication, par exemple un décodeur numérique (STB) associé au dispositif de restitution est apte à recevoir des actions en provenance de la télécommande et à les convertir directement en action de téléchargement du contenu secondaire à associer au contenu principal. La télécommande est de préférence dans ce mode la télécommande native, c'est-à-dire la télécommande associée par le constructeur à l'appareil (STB), pour le pilotage de celui-ci.

Selon un autre aspect matériel, l'invention concerne également un terminal de communication tel que défini ci-dessus, caractérisé en ce qu'il comprend aussi un module de réception apte à recevoir une action depuis le dispositif de restitution, ladite action ayant été émise depuis un dispositif de télécommande associé au dispositif de restitution.

Selon ce mode, la télécommande du terminal de restitution est typiquement celle du téléviseur connecté au décodeur numérique (STB). Par exemple, le décodeur transmet le contenu principal décodé au téléviseur par le biais d'une connectique HDMI, et la restitution s'effectue sous forme d'affichage et de son sur le téléviseur. Avantageusement selon ce mode, le téléviseur reçoit une information de sa télécommande (par exemple l'utilisateur a pressé la touche rouge ), l'adapte et la retransmet au décodeur (STB). Les actions effectuées sur la télécommande de la TV sont donc retransmises au terminal via le dispositif de restitution, et non plus via sa propre télécommande. Ceci est naturellement avantageux si l'utilisateur utilise la télécommande de son téléviseur et non la télécommande de son décodeur.

Une connectique de type HDMI permet de véhiculer de tels signaux du téléviseur vers le décodeur TV.

Une connectique de type HDMI (pour *High Definition Multimedia Interface*) est prévue en premier lieu pour véhiculer les contenus numériques comportant de l'image et du son avec un débit élevé (en haute-définition) et de manière fiable. Elle est aujourd'hui largement répandue et se trouve présente sur la plupart les terminaux vidéo du marché (téléviseurs, lecteurs DVD, ordinateurs, etc.). Avantageusement, la spécification HDMI-CEC (de l'anglais « Consumer Electronics Control ») peut être utilisée pour contrôler de surcroît les appareils connectés. L'une des broches de l'interface HDMI est alors dédiée à un ensemble de fonctions de contrôle entre appareils. Quand elle est mise en oeuvre par le constructeur, la spécification CEC autorise des fonctions de contrôle diverses sur des équipements connectés et notamment, lorsque les appareils connectés sont compatibles, d'instaurer une communication bidirectionnelle entre eux et d'enchaîner différentes commandes (jouer le contenu, l'accélérer, le mettre en pause, couper le son, passer au programme suivant, changer de programme, etc.). Dans le contexte de l'invention, elle peut être utilisée pour véhiculer les codes de touche de la télécommande à associer au choix d'un contenu secondaire, comme décrit ci-dessus (par exemple « S, T, E, S » pour les sous-titres en espagnol).

Selon un autre aspect matériel, l'invention concerne également un programme d'ordinateur apte à être mis en oeuvre dans un dispositif pour sélectionner un contenu multimédia tel que défini ci-dessus, le programme comprenant des instructions de code qui, lorsque le programme est exécuté par un processeur, réalise les étapes du procédé de sélection.

Ce dispositif de sélection et ce programme d'ordinateur présentent des caractéristiques et avantages analogues à ceux décrits précédemment en relation avec le procédé de sélection.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

L'invention sera mieux comprise à la lecture de la description qui suit, donnée à titre d'exemple et faite en référence aux dessins annexés.

### Les figures:

- La figure 1 représente un mode de réalisation de l'invention dans le contexte d'un réseau local équipé d'un service de consommation de contenus multimédia ;
- la figure 2 représente une télécommande d'un dispositif de restitution conforme au mode de réalisation de la figure 1 ;
- la figure 3 représente une architecture matérielle d'un décodeur numérique selon un mode de réalisation de l'invention ;
- la figure 4 représente un organigramme des différentes étapes du procédé selon un mode de réalisation de l'invention.

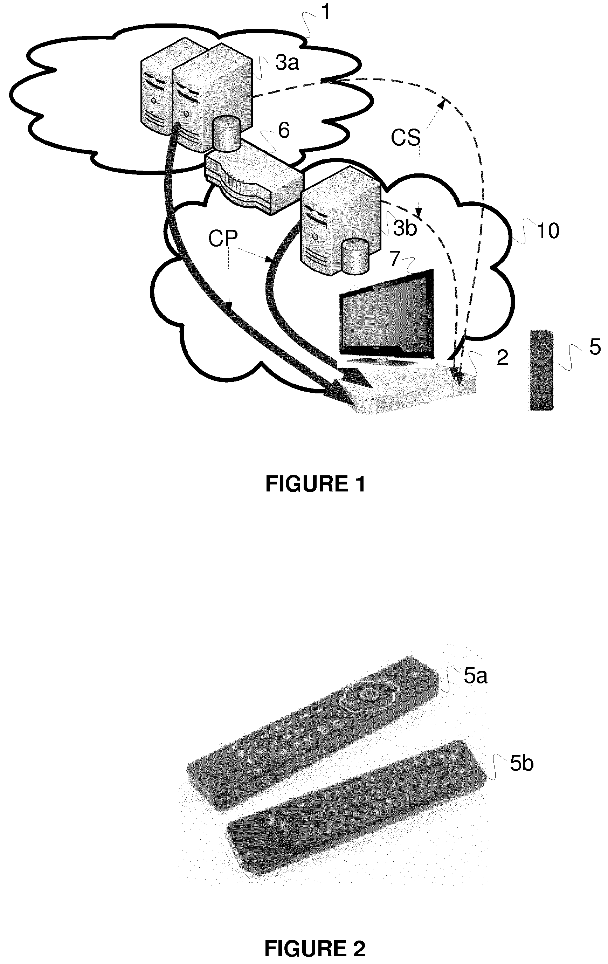

La figure 1 représente un mode de réalisation de l'invention dans le contexte d'un réseau local.

On rappelle ici qu'un réseau local, aussi appelé réseau domestique, est un réseau informatique qui relie ensemble, avec ou sans fils, des terminaux (ordinateurs, périphériques d'impression, de restitution, de stockage, etc.) d'une maison aptes à communiquer ensemble. Un réseau domestique comporte généralement un équipement routeur (6), aussi communément appelé passerelle domestique, ou passerelle de service, élément intermédiaire assurant la redirection, ou routage, des paquets de données entre les différents terminaux et les réseaux (réseau étendu (1) et réseau local (10)) qui lui sont connectés. Un tel réseau domestique connecte souvent les différents terminaux en utilisant des connexions filaires ou de type radio, par exemple WiFi (pour « Wireless Fidelity »). Le réseau (10) est dans cet exemple de type Internet. La passerelle de service (6) comporte une fonction de communication WiFi qui lui permet de communiquer sans fil avec les terminaux du réseau local, et une liaison filaire, par exemple ADSL, qui lui permet de communiquer avec le réseau Internet étendu (WAN, 1).

On entend par dispositif terminal, ou plus simplement « terminal », tout dispositif apte à se connecter à la passerelle (6) dans le contexte du réseau local, tel un ordinateur ou un dispositif du type téléviseur (TV, 7), ordinateur personnel (PC), smartphone (téléphone mobile intelligent) ou plus généralement tout dispositif apte à communiquer avec ou sans fils avec une passerelle de service.

Parmi ces terminaux, le dispositif (3b) représenté en figure 1 est selon cet exemple un dispositif de stockage de l'utilisateur, aussi appelé NAS (pour Network Attached Storage) désignant un ensemble de disques durs dans un appareil disposant par ailleurs de fonctions réseau.

Le terminal (2) est un dispositif de réception et de décodage de contenus multimédia, que l'on appellera par la suite "Set-Top-Box" ou "STB". La STB (2) est connectée au réseau local par l'intermédiaire de la passerelle de service (6). Le terminal (2) est associé à une télécommande (5) infrarouge (IR) ou Radiofréquence (RF) apte à commander à distance la STB (2), et donc le téléviseur (7) qui lui est connecté, comportant un écran d'affichage et des hauts parleurs pour la restitution des contenus multimédia. La STB (2) intègre des moyens d'accès aux chaînes et de "zapping" (c'est-à-dire de navigation d'une chaîne à l'autre) sur le réseau étendu (1), via la passerelle de service. Elle intègre également des moyens d'accès à des contenus multimédia du réseau local situés par exemple sur le NAS (3b), ainsi que des moyens d'accès à des options pour ces chaînes et/ou contenus, options correspondant ici à des contenus dits « secondaires » par opposition au contenu principal qui achemine les données audiovisuelles de la chaîne TV ou du contenu sélectionné.

La STB (2) et le NAS (3b) constituent ensemble, pour l'utilisateur, un service de consommation de contenus multimédia (en anglais, « média center »), c'est-à-dire un système lui donnant accès aux contenus multimédia du réseau local.

Selon un premier mode de réalisation, l'utilisateur du réseau local (10) souhaite obtenir un contenu audiovisuel qui se trouve par exemple sur le NAS (3b), avec les sous-titres en espagnol, également stockés sur le NAS (3b) sous forme de fichier.

Selon une variante, l'utilisateur de la STB (2) est abonné à un bouquet de chaînes TV par ADSL, stockées par exemple sur le serveur (3a) d'un opérateur dans le réseau étendu.

Selon encore une autre variante, les contenus multimédia peuvent être situés sur un périphérique de stockage externe (3a) de l'utilisateur (Cloud).

On suppose ici qu'initialement l'utilisateur regarde un contenu dénoté CP pour « Contenu Principal » (alternativement, une chaîne diffusée CHP), sur l'écran du dispositif d'affichage 7. A cet effet, la STB (2) reçoit, décode et éventuellement désembrouille le contenu CP. A ce contenu sont associées classiquement un certain nombre d'options, correspondant à des contenus secondaires (fichiers, flux, etc.) synchronisés avec le contenu principal, qui peuvent être décodés et restitués simultanément :
- un flux audio (AD) correspondant à une langue (L) donnée, pour restitution sonore ; le flux audio (AD) est choisi parmi EN (anglais), FR (français), ES (espagnol), etc.
- un flux de sous-titres, correspondant à une langue donnée, qui peut être restitué classiquement dans une petite fenêtre en bas de l'écran du dispositif TV (7). le flux de sous-titres, optionnel, est choisi parmi EN (anglais), FR (français) et ES (espagnol).

Cette liste d'options n'est naturellement pas limitative. On pourrait citer de nombreuses autre options à associer au contenu principal, par exemple des contenus de description audio (pour les malvoyants), des contenus de données complémentaires (acteurs, résumé des scènes, *making-of...* d'un film), des contenus comportant des données interactives pour interagir avec le contenu principal (votes, connexion à un site communautaire, etc.), des contenus olfactifs, des contenus audio complémentaires, etc.

Selon ce mode de réalisation, l'utilisateur est français et il apprend l'espagnol. Il aime donc écouter les contenus en français ou en anglais et disposer des sous-titres en espagnol. Afin d'éviter le travail fastidieux d'une sélection par navigation dans les menus à l'écran (appel du menu, utilisation des sous-menus, des flèches pour se déplacer, du bouton de validation, etc.), et ceci à chaque changement de programme ou à chaque redémarrage d'une session télévisuelle ou du visionnage d'un contenu, ce mode de réalisation de l'invention lui permet de sélectionner directement des options à partir de sa télécommande : une pression sur une certaine combinaison de touches, lorsque le contenu principal est en cours de lecture, lui permet de bénéficier immédiatement d'un affichage des sous-titres en espagnol.

L'utilisateur utilise à cette fin préférentiellement les touches alphanumériques de sa télécommande, qui ne servent pas directement à la sélection d'un contenu. En effet, lorsqu'un contenu (par exemple le canal 1) est en cours, une sélection de certaines autres touches (par exemple la touche 3) peuvent amener à un basculement non souhaité du contenu (dans ce cas sur le canal 3). En d'autres termes, certaines touches de la télécommande sont contextuellement inutiles, voire dommageables.

On suppose que la télécommande est munie de touches de fonctions permettant de sélectionner des lettres de l'alphabet, contextuellement utiles. L'utilisateur saisit une suite de lettres qu'on lui a indiquée, par exemple dans son manuel d'utilisation : sélection des sous-titres par action successive sur les touches portant les lettres « S » et « T » définissant le type de contenu secondaire, puis «E » et « S » pour la sélection d'un élément dans ce type (« STES » pour sous-titres espagnols). L'action sur une touche ou combinaison de touches pendant que le contenu principal est joué se traduit par l'accès à une table de correspondance en mémoire de la STB, dans laquelle les caractéristiques du contenu secondaire sont choisies, par exemple la lecture dans la table du type « ST » indique le type de contenu secondaire (les sous-titres) et la lecture de la chaîne « ES » indique la sélection de l'espagnol. Selon un autre exemple, un appui sur les touches « L », puis « E,N » signifie la sélection d'une piste audio anglaise, qui va être traduite comme telle par la STB pour demander la sélection du fichier ou des données audio correspondant à la langue anglaise.

La figure 2 représente une télécommande (5) d'une STB (alternativement, d'une passerelle domestique ou d'un téléviseur) conformément au mode de réalisation de la figure 1.

La télécommande selon cet exemple dispose de deux faces, l'une (5a) est utilisée pour saisir notamment les chiffres et l'autre (5b) présente un pavé de saisie alphabétique. Naturellement, tout autre type de télécommande peut être utilisé, notamment une télécommande à une seule face qui permet selon des combinaisons de touches de saisir des lettres ou des chiffres (aussi appelé « système T9 »).

Selon ce mode de réalisation, on suppose qu'une action est constituée de deux entrées successives de caractères alphanumériques sur la télécommande :
1. Un préambule indiquant le type d'option, et donc de contenu secondaire, par exemple
   o ST = sous-titre
   o L = langue
   o AD = audiodescription
2. Pour certains types (ST et L dans l'exemple ci-dessus), une seconde chaîne de caractères, entrée à la suite de la première, doit correspondre à une langue selon la norme ISO639-1 ou ISO639-2 (L'ISO 639 est une norme internationale qui définit des codes pour la représentation des noms de langues ; les langues sont représentées par un code unique de 2 ou 3 lettres (par exemple « ro », « rom » et « rou » sont associés au roumain).
3. L'ensemble des deux indications (préambule et choix de l'utilisateur) forme une action.

Un exemple de telle table (T) en mémoire de la STB est illustré ci-dessous :

**Table 1 : exemple de table (T) de correspondance en mémoire du dispositif associé à la télécommande**

| **TYPE** | **Signification** | **SELECTION** | **Action résultante** |
|---|---|---|---|
| L | langue (LG) | « E,N » | Choix de la langue anglaise |
| ST | Sous-titres (ST) | « E,N » | Choix des sous-titres anglais |
| AD | Audio | 51 | Choix d'un système sonore 5.1 |
| ST | Sous-titres (ST) | - | Activation/désactivation des sous-titres par défaut (première piste disponible) |

Il est de plus souhaitable de maîtriser l'enchaînement de la saisie de l'option dans le temps : dans notre exemple, si, dans un intervalle de temps prédéfini, par exemple 1 seconde, l'utilisateur n'a pas rentré deux caractères alphanumériques constitutifs de son choix (« S, T, E, S »), ou si les informations rentrées ne sont pas valides (e.g. le code de langue est incorrect), alors l'action n'est pas validée.

Selon une variante, certaines actions peuvent être prédéfinies par l'utilisateur. Par exemple, une interface graphique peut lui être proposée lors d'une étape préalable de configuration des touches de la télécommande, permettant de mémoriser les préférences de l'utilisateur de la STB et de les associer à des actions particulières sur les différentes touches. Par exemple, une table comme celle présentée ci-dessous peut être enregistrée en mémoire modifiable du terminal de communication (STB, 2) et modifiée par l'utilisateur lorsque celui-ci fait appel à l'interface graphique (e.g. par un menu).

**Table 2 : exemple de table (T) de correspondance personnalisable en mémoire flash du dispositif associé à la télécommande**

| **TYPE** | **Signification** | **SELECTION** | **Défaut** |
|---|---|---|---|
| Touche Bleue (B) | langue (LG) | « E,N » | FR |
| Touche Jaune (J) | sous-titres (ST) | « E,N » | ES |
| Touche Verte (V) | ST= LG | | |
| Touche Rouge (R) | ST= ES | | |

Dans cette table, donnée à titre d'exemple, quatre touches de la télécommande ont été prédéfinies :
- B correspond à l'option de langue, et donc au choix du contenu secondaire de langue ; si aucune action ne suit, la langue par défaut est sélectionnée (FR) ;
- J correspond à l'option de sous-titres ; si aucune action ne suit, la langue par défaut est sélectionnée (ES) ;
- V positionne le sous-titre dans la même langue que la piste audio (ST=LG) ;
- R positionne les sous-titres en espagnol (ST=ES).

Naturellement, toutes les combinaisons à la portée de l'homme du métier peuvent être envisagées.

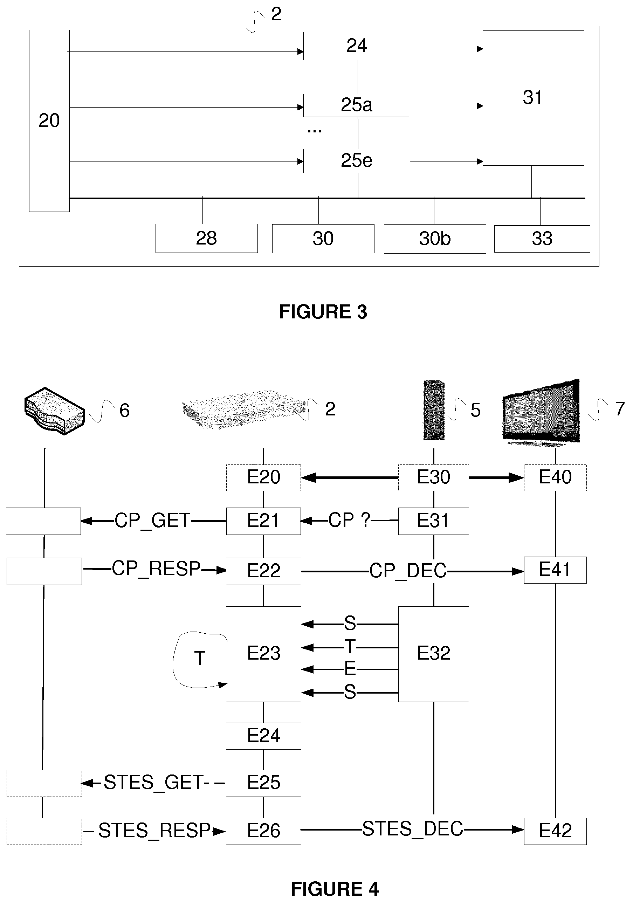

La figure 3 représente une architecture matérielle d'un décodeur numérique (STB, 2) selon un mode de réalisation de l'invention.

La STB 2 comprend :
- une interface 20 de connexion à la passerelle de service (6) comportant notamment un module d'émission et un module de réception ;
- un module de désembrouillage, un module de démultiplexage (notamment pour les flux de chaînes multiplexées) de gestion de la réception de flux multicast, etc., non représentés.
- un module 24 de décodage d'un flux/contenu principal audiovisuel (AV);
- des modules 25A-25E de décodage de flux/contenus secondaires;
- un module 28 comprenant un récepteur infrarouge associé à un bloc d'interprétation de commandes IR en provenance de la télécommande ou/et un récepteur radiofréquence associé à un bloc d'interprétation de commandes RF en provenance de la télécommande 5 ;
- une mémoire flash 30 non réinscriptible par l'utilisateur contenant notamment la table de correspondance qui permet d'associer un préambule (« S, T », « L ») à un choix de l'utilisateur (« S,T ») comme représenté à l'appui de la figure 2 (Table 1) ;
- une mémoire 30b réinscriptible par l'utilisateur, contenant la table de correspondance paramétrable qui permet d'associer une touche (ou combinaison de touches) à un choix de l'utilisateur comme représenté à l'appui de la figure 2 (Table 2) ;
- classiquement, un ensemble de mémoires du terminal (RAM, ROM, registres, etc.) contenant notamment les informations sur les contenus multimédia disponibles et tous les paramètres nécessaires pour accéder à un contenu principal (adresse d'un flux multicast, adresse http d'un flux unicast, etc.) ou secondaire (adresse d'un flux multicast, adresse http d'un flux unicast de sous-titres, etc.).
- un module de planification vidéo 31 du signal audio, vidéo et graphique à transmettre au dispositif d'affichage 7, ainsi qu'un module de transmission d'un signal audio et vidéo vers le dispositif de restitution 7, par exemple de type HDMI, et de réception de signaux de commande en provenance du dispositif de restitution (HDMI/CEC). Le module de planification vidéo 31 comprend un processeur graphique. Il a pour rôle d'établir un plan vidéo à partir des contenus/flux fournis par les modules de décodage, en fonction de paramètres de configuration prédéfinis (son utilisé, éléments graphiques ajoutés, etc.) et de contrôler l'affichage sur un écran, ici l'écran du téléviseur 7. Il est donc destiné à planifier le signal vidéo, audio et graphique à transmettre au dispositif d'affichage et à contrôler l'affichage. Il intègre une fonction adaptée pour insérer des contenus secondaires (de type sous-titres) dans le contenu principal visualisé à l'écran à un emplacement différent.
- une unité centrale de commande (UC, ou CPU) 33 à laquelle tous les éléments de la STB 2 sont connectés et destinée à en commander le fonctionnement.

Lorsque l'utilisateur regarde le contenu (ou la chaîne) CP, le module de réception 20 est agencé pour recevoir un signal de données audio et vidéo composant le contenu principal CP.

Le module 28 est agencé pour recevoir des signaux infrarouges ou RF en provenance de la télécommande 5, pour interpréter, convertir ces signaux en commandes et pour transmettre ces commandes à l'unité centrale 33.

Dans la description qui précède, l'équipement STB utilise une requête de type HTTP pour accéder au contenu de l'utilisateur présent sur le NAS et les contenus multimédia encodés lui sont transmis de manière progressive sous forme de flux HTTP.

Selon une variante, les flux peuvent être transmis depuis un serveur de VOD selon une technique de téléchargement progressif adaptatif, en anglais « *adaptive streaming* », abrégé en HAS, basée également sur le protocole HTTP. Ce type de technique permet notamment d'offrir une bonne qualité de contenus à l'utilisateur en tenant compte des variations de bande passante qui peuvent se produire sur la liaison entre le terminal client (7) et la passerelle de services (6), ou entre cette dernière et le serveur de contenus (3a).

Selon une autre variante, la STB accède directement aux contenus d'un support numérique qui lui est connecté, par exemple une clé USB.

Selon encore une autre variante, le protocole IGMP peut être utilisé pour demander la réception ou l'arrêt d'un flux multicast. On pourrait envisager l'utilisation d'un autre protocole à la place du protocole IGMP.

La figure 4 représente un organigramme des différentes étapes du procédé selon un mode de réalisation de l'invention.

On note E20/E30/E40 les étapes préalables de création et de mémorisation de la table T d'associations décrite à l'appui de la figure 2. L'association des combinaisons de touches à une action peut être définie par l'opérateur/constructeur de la STB (Table 1 ci-dessus proposée à l'appui de la figure 2), ou personnalisée par l'utilisateur (Table 2 ci-dessus proposée à l'appui de la figure 2) ; dans ce dernier cas, comme expliqué à l'appui de la figure 2, une page de configuration pourra être proposée à l'utilisateur via un menu de la STB (affichée sur le téléviseur (7)), lui permettant de personnaliser ses raccourcis de touches, par exemple lors de la mise en service de la STB. Cette étape, facultative, est représentée en pointillés.

Lors d'une étape E31, l'utilisateur requiert le contenu principal CP. Il s'agit typiquement d'un contenu multimédia (e.g. un film) qui se trouve sur l'un des terminaux du réseau local, par exemple le NAS de l'utilisateur (3b), ou la passerelle (6), un PC, etc.

Lors d'une étape E21, le module 20 de la STB (2) reçoit cette commande, l'analyse, et demande réception du contenu sur le réseau local en émettant vers la passerelle un message noté dans cet exemple « CP_GET ». La requête est ici traitée sur la passerelle domestique qui gère le réseau local ; selon une variante, le module de gestion des contenus peut se trouver directement sur la STB.

On note E22 l'étape comportant la suite des opérations de réception, décodage et désembrouillage du contenu principal CP par la STB 2. Par "contenu principal" on entend désigner le contenu (vidéo) (par opposition à un autre contenu correspondant à une option (sous-titres, etc.)).

Par défaut, l'audio est en français.

Le contenu principal CP, une fois décodé et éventuellement désembrouillé, est transmis au dispositif de restitution 7 par la STB 2 via son module 31.

Lors d'une étape E41, le contenu principal CP est reçu, visualisé et affiché, sur l'écran du dispositif d'affichage 7.

On suppose maintenant que, pendant qu'il regarde le contenu CP lors de l'étape E32, l'utilisateur commande l'affichage des sous-titres en espagnol par appui sur des touches spécifiques de la télécommande 5, par exemple la touche rouge (R) qu'il a prédéfinie lors de l'étape E30, ou encore une succession de touches de type « S,T » et « E,S ». Cette action est reçue sur la STB lors de l'étape E23. Le programme selon l'invention installé sur la STB reçoit les caractères « S », « T », « E », « S ». Un *timer T* d'une durée prédéfinie TMAX (par exemple, une seconde) soit par le constructeur de la STB, soit par l'utilisateur, soit par tout autre moyen, est armé après chaque réception d'un nouveau caractère. Si le caractère suivant n'est pas reçu dans ce laps de temps, l'action est interrompue et le procédé passe à l'étape E24.

Lors de l'étape E24, la STB (2) analyse l'action effectuée sur la télécommande via la chaîne de caractères qu'elle a reçue, et, si elle dispose d'au moins un caractère pour le type de contenu secondaire, interroge la table en mémoire. Si le préambule correspond à un type connu, c'est-à-dire identifiable dans la table (première colonne suivant la table 1 de l'exemple de la figure 2) alors elle lit la suite de la chaîne, correspondant au choix d'un élément possible par l'utilisateur (sauf si ce choix est positionné par défaut). Dans notre exemple, elle lit la chaîne « ES » qui correspond au code ISO de la langue espagnole, en déduit qu'elle doit se procurer les sous-titres en espagnol :
- soit en émettant, au cours de l'étape E25, une demande vers le réseau (STES_GET) via la passerelle domestique (6) ;
- soit en lisant le flux de sous-titres dont elle dispose déjà : c'est le cas par exemple de certains formats de fichiers audio-vidéo qui contiennent aussi plusieurs pistes de sous-titres dans le fichier (format .mkv)

Lors d'une étape E26, les sous-titres sont décodés et transmis à l'écran (STES_DEC) par exemple via une connexion HDMI.

Lors d'une étape E42, les sous-titres s'affichent à l'écran, sous forme par exemple d'incrustation dans l'image du contenu principal CP.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

En variante, on pourrait envisager la diffusion de contenus audiovisuels, depuis des plateformes de VOD, ou purement audio depuis des plateformes audio, de la radio numérique, etc.

En variante, on pourrait aussi envisager que l'utilisateur utilise la télécommande du téléviseur et que ce dernier transmette les ordres appropriés (du choix d'option) au décodeur (STB) en utilisant notamment la norme HDMI/CEC.

## Revendications

1. Procédé pour sélectionner un contenu multimédia secondaire (CS, STES) associé à un contenu multimédia principal (CP) restitué sur un dispositif de restitution (TV, 7), les contenus étant stockés dans un réseau (1,10) et commandés par un dispositif de télécommande (5), le procédé comportant les étapes suivantes :
- restitution (E22) du contenu multimédia principal sur le dispositif de restitution (7) ;
- détection (E23) d'une action (S,T,E,S) sur le dispositif de télécommande (5) ;
- accès (E25) au contenu secondaire (STES) correspondant à ladite action ;
- restitution (E26) du contenu secondaire (STES) avec le contenu principal (CP) sur le dispositif de restitution.
**caractérisé en ce que** l'accès au contenu secondaire (E25) est précédé d'une étape d'obtention (E24) d'une donnée de mise en correspondance (T) entre l'action (S,T,E,S) sur le dispositif de télécommande (5) et le contenu secondaire (STES).

2. Procédé selon la revendication 1, dans lequel l'action sur le dispositif de télécommande (5) est une sélection d'au moins deux touches (« S », « T ») de la télécommande.

3. Procédé selon la revendication 2, dans lequel la sélection successive de deux touches sur la télécommande (5) doit être effectuée dans une durée maximale prédéfinie (TMAX).

4. Procédé selon la revendication 2, dans lequel au moins une touche sélectionnée correspond à une donnée de type de contenu secondaire (« L », « ST ») et permet de faire la mise en correspondance entre l'action sur le dispositif de télécommande (S,T) et le contenu secondaire (STXX).

5. Procédé selon la revendication 1, dans lequel la donnée (« ST ») de mise en correspondance entre l'action sur le dispositif de télécommande (« S,T ») et le contenu secondaire à sélectionner (STXX) est mémorisée dans une structure de données de correspondance (T) en mémoire d'un terminal au moins (2,6) du réseau (1,10).

6. Procédé selon la revendication 5, **caractérisé en ce que** la structure de données de correspondance (T) en mémoire du terminal (2,6) est modifiée par l'utilisateur au moyen d'une interface.

7. Dispositif pour sélectionner un contenu multimédia secondaire (CS, STES) associé à un contenu multimédia principal (CP) restitué sur un dispositif de restitution (TV, 7), les contenus étant stockés dans un réseau (1,10) et pouvant être commandés par un dispositif de télécommande (5), le dispositif comprenant les modules suivants :
- un module de restitution (E22, 24) du contenu multimédia principal sur le dispositif de restitution ;
- un module de détection (E23, 28) d'une action (S,T,E,S) sur le dispositif de télécommande (5) ;
- un module d'accès (E25, 20) au contenu secondaire (STES) correspondant à ladite action ;
- un module de restitution (E26,31) du contenu secondaire (STES) avec le contenu principal (CP).
**caractérisé en ce qu'**il comporte en outre un module (33, 30b) de mise en correspondance entre l'action (S,T,E,S) sur le dispositif de télécommande (5) et le contenu secondaire (STES).

8. Terminal de communication (STB) comprenant un dispositif selon la revendication 7.

9. Terminal de communication (STB) selon la revendication 8 **caractérisé en ce qu'**il comprend un module de réception (HDMI/CEC) apte à recevoir une action depuis le dispositif de restitution (TV, 7), ladite action ayant été émise depuis un dispositif de télécommande (5) associé au dispositif de restitution (TV, 7).

10. Programme d'ordinateur sur un support de données comprenant des instructions logicielles pour commander l'exécution des étapes du procédé de la revendication 1, lorsque le programme est exécuté par un ordinateur.
